Europäisches Patentamt

European Patent Office

Office européen des brevets

(11) Numéro de publication: **0 082 820**
**A2**

# DEMANDE DE BREVET EUROPEEN

(21) Numéro de dépôt: 82810546.0

(22) Date de dépôt: 16.12.82

(51) Int. Cl.³: **G 01 L 1/24**
G 01 B 11/16, G 08 B 13/12

(30) Priorité: 21.12.81 CH 8152/81

(43) Date de publication de la demande:
29.06.83 Bulletin 83/26

(84) Etats contractants désignés:
AT BE CH DE FR GB IT LI NL SE

(71) Demandeur: BATTELLE MEMORIAL INSTITUTE
7 route de Drize
CH-1227 Carouge/Genève(CH)

(72) Inventeur: Harmer, Alan Lewis
74 chemin de la Mère Voie
CH-1228 Plan les Ouates(CH)

(74) Mandataire: Dousse, Blasco et al,
7, route de Drize
CH-1227 Carouge/Genève(CH)

(54) Dispositif de détection de pression.

(57) Ce dispositif comporte une fibre optique (2) dont une extrémité est situé face à une source de lumière et dont l'autre extrémité est associée à un photodétecteur (4). Un fil (5) est enroulé en hélice autour de la fibre optique (2) à l'intérieur d'une gaine de protection 6, de sorte que lorsqu'une pression est exercée sur la fibre 2, elle se traduit par des déformations périodiques de cette fibre et des pertes de lumière transmise à travers cette fibre, mesurées par le photodétecteur (4).

FIG. I

EP 0 082 820 A2

Croydon Printing Company Ltd

DISPOSITIF DE DETECTION DE PRESSION

La présente invention a pour objet un dispositif de détection de pression comprenant une fibre optique, une source de rayonnement lumineux associée à une extrémité de cette fibre optique pour injecter de la lumière le long de cette fibre, un détecteur associé à l'autre extrémité de cette fibre optique, pour mesurer l'intensité de lumière ressortant de cette fibre et des moyens pour induire des flexions périodiques le long de cette fibre, consécutivement à ladite pression.

L'effet des courbures périodiques sur la transmission de lumière à travers les fibres optiques a été étudié notamment par G. Zeidler et à fait l'objet d'une communication lors du 2e colloque européen sur les transmissions par fibres optiques qui s'est tenu à Paris le 27 septembre 1976. Ces courbures périodiques sont induites en pressant une fibre optique entre deux mâchoires dentées dont les dents sont décalées d'une demi période les unes par rapport aux autres. Ces micro-courbures ont pour effet d'augmenter les pertes de lumière transmises à travers la fibre, en fonction de l'amplitude des déformations pour une période donnée, choisie en fonction des longueurs d'ondes transmises à travers la fibre.

Il existe des brevets qui ont proposé d'exploiter ce phénomène, notamment le brevet SE 410 521 ainsi que le brevet US 4 163 397.

Jusqu'ici, dans toutes les solutions proposées, la fibre optique est placée entre des mâchoires destinées à induire des flexions périodiques le long de la portion de fibre prise entre ces mâchoires. Selon les solutions proposées jusqu'ici, les flexions périodiques de la fibre optique ne peuvent être induites qu'en des portions déterminées préalablement. Il sera alors nécessaire de disposer autant de paires de mâchoires qu'il y aura de portions de fibres sur lesquelles on veut induire des flexions périodiques, le reste de la fibre restant inutilisable pour la mesure de pressions locales.

Suivant les applications il n'est pas possible de prévoir une localisation particulière des sollicitations exercées sur la fibre et au contraire, il est souhaitable de pouvoir utiliser la fibre sur toute sa longueur et sur n'importe quelle portion de cette longueur.

Il a, par ailleurs, déjà été proposé dans le brevet US 4.226.504 par exemple, de former un câble à fibre optique dans lequel une fibre optique est protégée par une fibre non optique enroulée en hélice autour de la fibre optique. Une gaine est ensuite extrudée autour de cette hélice.

On a constaté qu'une telle structure peut être utilisée pour créer des courbures périodiques lorsqu'elle est soumise à une pression transversale à l'axe longitudinal du câble. En effet, lorsqu'une telle pression est exercée, elle est transmise à la fibre optique, consécutivement à l'écrasement de l'hélice, par les portions de cette hélice adjacentes à la fibre, contenues dans un plan diamétral de cette fibre de sorte que ces portions de l'hélice diamétralement opposées à la fibre optique sont décalées les unes par rapport aux autres d'un demi pas d'hélice et induisent, de ce fait, des flexions périodiques de la fibre optique.

Le but de la présente invention est précisément d'utiliser un câble optique présentant une structure de ce type et permettant d'induire des courbures périodiques en n'importe quelle partie de sa longueur consécutivement à des pressions locales exercées sur ce câble de manière à les détecter.

A cet effet, la présente invention a pour objet un dispositif de détection de pression comprenant une fibre optique, une source de rayonnement lumineux associée à une extrémité de cette fibre optique pour injecter de la lumière le long de cette fibre, un détecteur associé à l'autre extrémité de cette fibre optique, pour mesurer l'intensité de lumière ressortant de cette fibre et des moyens pour induire des flexions périodiques le long d'au moins une portion de cette fibre, consécutives à ladite pression. Ce dispositif est caractérisé par le fait qu'il comporte une gaine de protection de la fibre optique à laquelle est associé un élément filiforme enroulé en hélice autour de l'axe longitudinal de cette fibre optique avec un pas correspondant au double de ladite période, cet élément filiforme constituant lesdits moyens pour induire des flexions périodiques le long de la fibre.

L'avantage de ce dispositif de mesure est d'intégrer les moyens pour induire les flexions périodiques à un câble optique, ces moyens étant susceptibles d'agir sur toute la longueur de cette fibre. En outre, les courbures imposées au câble lui-même ne se traduisent par aucune sollicitation de la fibre optique, seule une pression exercée sur le câble à fibre optique étant susceptible de comprimer la fibre optique consécutivement à un écrasement des spires formées par le fil enroulé autour de cette fibre. Grâce à cette propriété, le câble à fibre optique peut détecter des contraintes de pression sur des surfaces non planes étant donné que ce câble peut épouser la forme de telles surfaces. Un tel câble permet par ailleurs de recevoir de l'information en un point quelconque de sa longeur, sans que cette information soit introduite par une extrêmité et sans solution de continuité de la gaine ou de la fibre optique. On peut imaginer en effet la pose d'un tel câble comme moyen de communication de signaux codés introduits en un point quelconque du câble à travers sa gaine par un élément transducteur piézoélectrique pincé le long de ce câble. Une telle application offre l'avantage de ne pas être génératrice d'étincelles et d'être insensible aux perturbations de champs magnétiques. Il serait par exemple possible d'envisager un moyen de communication dans une mine en raison des dangers d'explosions qu'un tel câble permet d'éviter et compte tenu de la difficulté rencontrée par les transmissions sans fil. On pourrait aussi imaginer un réseau d'information relié à un ordinateur. Bien entendu ces applications ne sont données qu'à titre d'exemple et leur nombre peut être multiplié, tant l'intégration des moyens pour induire des flexions périodiques de la fibre dans le câble à fibre optique offre d'applications multiples en de nombreux domaines. Il est possible de réaliser des systèmes de commande, d'alarme antivol, d'ouverture automatique de portes à l'aide de ce câble. Sa fabrication peut se faire sur de grandes longueurs livrées en bobine dont l'utilisateur prélève les portions désirées au fur et à mesure de ses besoins. La fabrication intégrée et en grande série du dispositif de détection objet de l'invention permet en outre d'abaisser considérablement les coûts de ces dispositifs qui ne nécessitent plus de montage particulier de la fibre optique entre des mâchoires mobiles comme dans l'état de la technique.

Le dessin annexé illustre, très schématiquement et à titre d'exemple, différentes variantes du dispositif de détection objet de la présente invention.

La fig. 1 est une vue en perspective de ce dispositif avec arrachement.

Les figs 2 à 5 sont des vues partielles en perspective de variantes de ce dispositif.

Les figs 6 à 8 sont des diagrammes de différents paramètres du dispositif de mesure objet de l'invention.

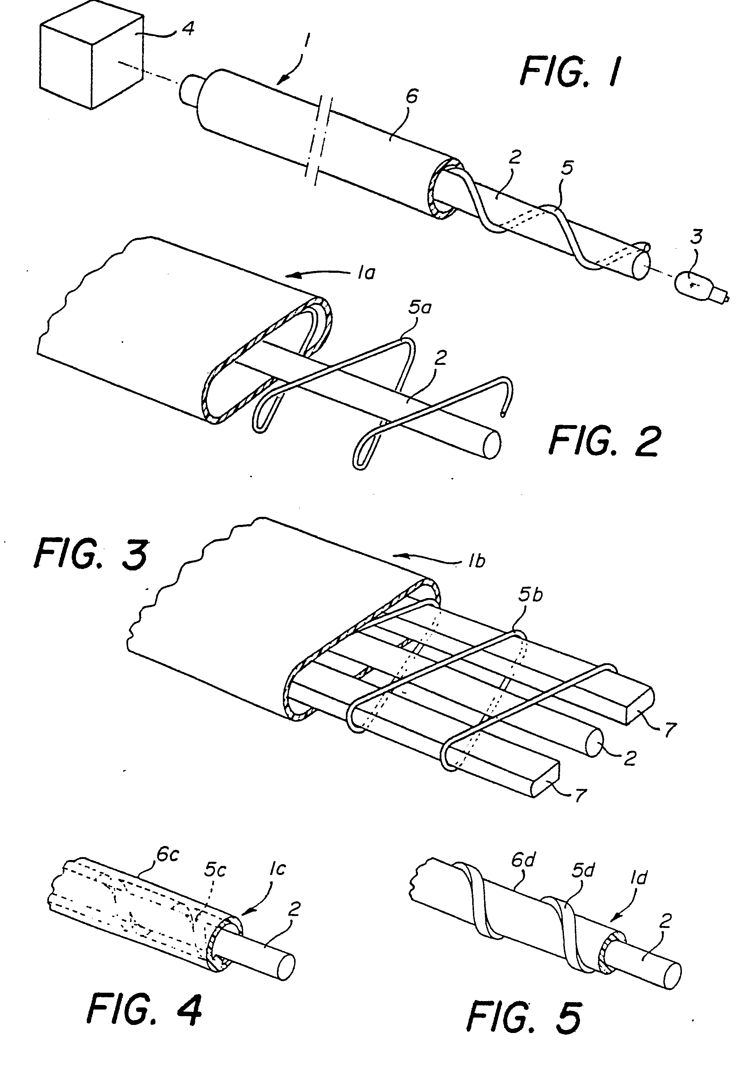

La fig. 1 illustre un câble à fibre optique 1 comprenant une fibre optique 2 dont une extrémité est associée à une source de lumière et dont l'autre extrémité est associée à un photodétecteur 4. Cette fibre optique 2 est entourée d'un fil 5 notamment un fil métallique enroulé en hélice de pas déterminé constant. Une gaine souple de protection 6 enveloppe la fibre optique 2 et le fil métallique 5 qui l'entoure.

Lorsqu'une pression tendant à écraser l'hélice de fil métallique 5 est exercée sur une portion du câble à fibre optique 1, une série de micro-courbures périodiques, dont la période correspond au demi pas de l'hélice sont imprimées à la fibre optique 1. Il s'ensuit une atténuation de la lumière transmise à travers la fibre optique et mesurée par le photodétecteur. On examinera par la suite l'influence des différents paramètres des micro-courbures sur cette atténuation. Il faut seulement relever pour le moment que l'hélice de fil métallique 5 enroulée autour de la fibre optique 2 étant de section circulaire offre une assez grande résistance à l'écrasement de sorte que la sensibilité du câble à fibre optique n'est pas très grande. Par contre cette forme d'exécution peut parfaitement convenir pour des gammes de pressions relativement élevées. Elle présente en outre l'avantage d'être sensible aux pressions exercée sur 360° autour de l'axe de longitudinal de la fibre optique 2.

Pour rendre le câble à fibre optique sensible à des pressions inférieures à celles du câble de la fig. 1, la variante de la fig. 2 propose d'enrouler un fil métallique 5a autour d'une section droite ovale ou elliptique dont le petit axe coïndice au diamètre de la fibre optique 2. Une telle structure offre une résistance sensiblement inférieure à l'écrasement que la structure de la fig. 1, mais n'est sensible qu'aux pressions dirigées selon le petit axe de l'ellipse ou de l'oval autour duquel le fil 5a est enroulé. Par contre, la fibre optique 2 ne peut pas être utilisée à des pressions aussi élevées que dans le cas de la fig. 1 sans risque de l'endommager.

La troisième variante illustrée par la fig. 3 a été étudiée pour réagir à de faibles pressions sans risque d'endommagement de la fibre optique, ou tout au moins en augmentant très sensiblement la valeur limite de la pression maximum admissible. A cet effet deux rubans métalliques 7 sont disposés diamétralement opposés par rapport à l'axe de la fibre optique. L'épaisseur de ces rubans métalliques 7 est choisie en fonction de la déformation maximum de la fibre optique 2, c'est-à-dire à une valeur légèrement inférieure au diamètre de la fibre optique 2. Un fil métallique 5b est enroulé autour des bords externes de ces rubans métalliques 7 de sorte que la portion de fil 5b sollicitée à la pression est rectiligne et offre de ce fait une résistance plus faible que celle des fils métalliques 5 ou 5a des fig. 1 respectivement 2. Par contre, la présence des rubans métalliques 7 limite l'amplitude des déformations de là fibre optique 2 de sorte que ce câble à fibre optique plat 1b tout en étant très sensible, accepte des pressions relativement élevées.

Selon une quatrième variante illustrée par la fig. 4, l'élément filiforme est constitué par une nervure 5c ménagée sur la face interne de la gaine 6c.

La variante illustrée par la fig. 5 se rapporte à un dispositif comprenant une gaine intérieure 6d à la surface de laquelle apparaît une nervure 5d qui peut être formée à partir de la gaine elle-même ou d'une deuxième gaine coaxiale soudée autour de la gaine 6d et dans laquelle un prédécoupage permet d'enlever une partie pour faire réapparaître la gaine intérieure 6d et ne laisser subsister que la nervure 5d. Dans ce cas, les contraintes sont induites dans la fibre optique 2 au travers de la gaine 6d.

Dans les cinq variantes qui viennent d'être décrites, les gaines peuvent être réalisées en un matériau transparent de manière à permettre de détecter la lumière sortant de la fibre optique 2.

Il est encore possible d'utiliser une fibre optique torsadée en faisant coïncider le pas de l'élément filiforme 5 de sollicitation mécanique et le pas du plan de polarisation torsadé. De telles fibres sont décrites par A.J. Barlow J.J. Ramskov Hansen et D.N. Payne dans "Birefringence and polarisation mode-dispersion in spun single-mode fibres" (Applied Optics Vol. 20 p. 2962 Sept. 1981).

Comme on l'a signalé précédemment, différents paramètres influent sur l'atténuation de la lumière transmise à travers la fibre optique. Si l'on considère une fibre optique à indice de réfraction variant progressivement, la périodicité critique $\Lambda$ de la perturbation pour coupler tous les groupes de modes voisins est donnée par Fields

$$\Lambda = 2 \ \Pi \ a / (2\Delta)^{\frac{1}{2}} \qquad (1)$$

où : a = rayon du noyau de la fibre
$2\Delta = \left[ 1 - n_O^2/n_C^2 \right]$
$n_O$ = indice de réfraction de l'enveloppe
$n_C$ = indice de réfraction du noyau

On a choisi la fibre optique suivante pour déterminer la valeur de la périodicité critique et la sensibilité des effets des micro-courbures.

Fibre à indice progressif "Corning" = no 41 292 205
Atténuation à 820 nm = 4,2 dB/km
ouverture numérique = 0,201
diamètre d'enveloppe = 125 $\mu$m
diamètre du noyau = 60 $\mu$m

L'ouverture numérique peut être utilisée pour calculer les indices de réfraction respectifs du noyau et de l'enveloppe.

$$O.N. = (n_C^2 - n_O^2)^{\frac{1}{2}} \qquad (2)$$

Ces formules appliquées à la fibre optique ci-dessus donnent les valeurs suivantes:

$n_O = 1,458$
$n_C = 1,472$
$\Delta = 9,33.10^{-3}$
$\Lambda = 1,380$ mm.

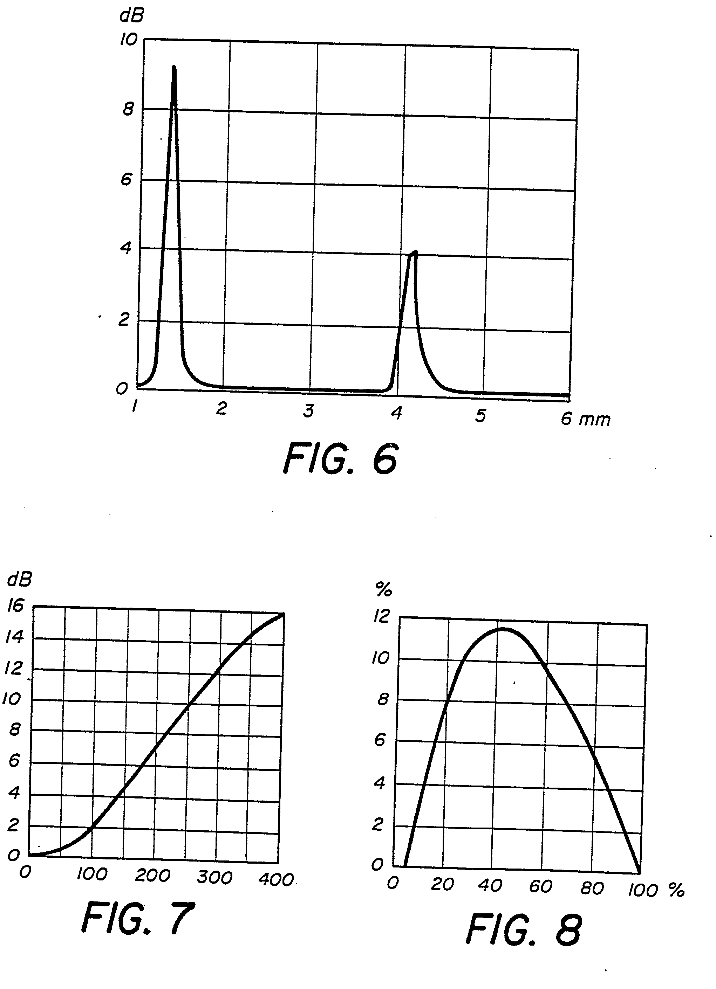

Des essais réalisés avec une double fibre optique prise successivement entre trois jeux de deux plaques munies d'une grille mécanique formée par dix chevilles d'acier de 1,0, 1,5 et respectivement 3,0 mm de diamètre, allongées côte à côte sur ces plaques et qui ont permis de déterminer en pratique la périodicité susceptible de produire l'atténuation maximum. Les résultats de ces essais sont portés sur le diagramme de la fig. 6. L'atténuation maximum se produit à une périodicité :

$$\Lambda = 1,346 \text{ mm}$$

qui est voisine de la valeur théorique calculée. Une atténuation plus faible se produit à la troisième harmonique 3 $\Lambda$ de cette valeur à $\Lambda = 4,1$.

Le diagramme de la fig. 7 illustre la variante d'atténuation avec la charge. La courbe est presque linéaire de 100 à 300 g avec une sensibilité de 0,0526 dB/g.

La longueur totale de fibre optique prise entre les plaques était de 26,92 mm (2 x 10 x 1346) qui, avec une charge de 300 g correspond à :

Atténuation = 4,67 dB/cm

Distorsion = 2,85 $\mu$m

Contrainte = 16,5 kg/mm$^2$

Les deux dernières valeurs ont été calculées. Ces résultats montrent qu'une valeur d'atténuation raisonnable peut être obtenue pour des valeurs de charge, de distorsion et de contrainte sur la fibre acceptables.

Des essais ont été réalisés avec des câbles formés des trois structures illustrées aux fig. 1 à 3.

TABLEAU I

| No | Périodicité | Gaine | Atténuation/5kg |
|----|-------------|-------|-----------------|
| 1 | 1,2 mm | Novoplast 1,3/0,5 mm | 1,65 dB |
| 2 | 1,35 mm | Novoplast 1,3/0,5 mm | 8,00 dB |
| 3 | 1,35 mm | Sans | 17,1 dB |
| 4 | 1,35 mm | Teflon 1,2/05 mm | 1,49 dB (10 kg) |
| 5 | 1,35 mm | Guipage de cuivre et plastosyn 1,8/1,0 mm ext. | 7,1 dB |

Différents éléments de câble ont été réalisés avec la structure à ressort en hélice de la fig. 1 en utilisant de la corde à piano de 0,1 mm de diamètre entourée par une gaine. Les résultats de ces essais sont donnés dans le tableau I, la sensibilité étant donnée pour 5 kg/cm.

On a également mesuré l'effet résultant de l'enroulement de deux tours de câble autour d'un cylindre de 1 cm de diamètre en le comparant avec une fibre optique seule enroulée deux tours autour de ce même cylindre.

Fibre seule 0,40 dB
Câble       0,37 dB

On constate que la structure de câble selon l'invention permet de réduire les pertes dues aux micro-courbures qui se produisent lorsque la fibre forme un arc de cercle.

Les essais réalisés avec la structure de la fig. 2 en utilisant également une corde à piano de 0,1 mm de diamètre avec une périodicité de 1,35 mm conformée pour donner une forme ovale avec une exentricité d'approximativement 3. La sensibilité d'une telle structure est de 11,1 dB/kg ce qui est trois fois plus sensible que la structure à enroulement circulaire de la fig. 1.

Les pertes dues aux micro-courbures statiques pour un câble enroulé sur un cylindre de 10 mm de diamètre sont de 0,20 dB. Par conséquent, on constate que la sensibilité est accrue sans augmenter les pertes statiques pour des rayons de courbures prononcés.

La structure de la fig. 3 a été testée avec une fibre optique semblable à celle de la fig. 1 tenue entre deux rubans métalliques 7 de 0,1 mm d'épaisseur et 0,5 mm de largeur avec un fil d'acier de 0,15 mm de diamètre soudé par points des deux côtés des rubans métalliques 7, la périodicité étant de 1,35 mm.

La sensibilité statique maximum de cette structure est de 0,03 dB/g ce qui est comparable à ce qu'on obtient avec le pincement d'une fibre entre deux mâchoires dentées.

Les pertes dues aux micro-courbures consécutives au cintrage de la fibre autour d'un cylindre de 10 mm de diamètre sont seulement de 0,098 dB.

Cette structure a également été utilisée pour tester l'influence d'un transducteur pièzo-électrique (Physik Instruments) modifié pour pincer le câble. La hauteur de la modulation en fonction de l'intensité de lumière transmise est montrée par le diagramme de la fig. 8, pour une tension d'excitation pointe à pointe de 20 V qui est équivalente à un déplacement de 0,2 $\mu$m (le transducteur piézo-électrique ayant un déplacement correspondant à 1 $\mu$m pour 100 volts. On voit que la sensibilité maximum est obtenue à une lumière transmise de 40% donnant une modulation de 12%. Dans ces conditions de réglage, le rapport signal/bruit pour différentes largeurs de bande du détecteur sont :

| Largeur de bande | Rapport signal/bruit |
|---|---|
| 1 Hz | $2,9.10^3$ |
| 10 Hz | $1,2.10^3$ |
| 5 kHz | $5,4.10^2$ |

Ainsi à une largeur de bande de 1 Hz la capacité de détection correspond à un déplacement de 0,69 Å pour un rapport signal/bruit de 1, ce qui démontre la sensibilité tout à fait remarquable de cette structure.

La hauteur de la modulation en fonction de la tension d'excitation est une fonction linéaire de cette tension de 0 à 150 V correspondant à un déplacement allant jusqu'à 1,5 $\mu$m. Ceci montre que l'on peut obtenir d'importantes modulations et qu'une amélioration de cette caractéristique pourrait conduire à l'utilisation d'un modulateur analogique.

- 11 -                    0082820

REVENDICATIONS

1. Dispositif de détection de pression comprenant une fibre optique, une source de rayonnement lumineux associée à une extrémité de cette fibre optique pour injecter de la lumière le long de cette fibre, un détecteur associé à l'autre extrémité de cette fibre optique, pour mesurer l'intensité de lumière ressortant de cette fibre et des moyens pour induire des flexions périodiques le long d'au moins une portion de cette fibre, consécutives à ladite pression, caractérisé par le fait qu'il comporte une gaine de protection de la fibre optique à laquelle est associé un élément filiforme enroulé en hélice autour de l'axe longitudinal de cette fibre optique avec un pas correspondant au double de ladite période, cet élément filiforme constituant lesdits moyens pour induire des flexions périodiques le long de la fibre.

2. Dispositif selon la revendication 1, caractérisé par le fait que cet élément filiforme est disposé à l'intérieur de la gaine de protection.

3. Dispositif selon la revendication 1, caractérisé par le fait que cet élément filiforme est disposé à l'extérieur de la gaine de protection.

4. Dispositif selon l'une des revendications 2 et 3, caractérisé par le fait que cet élément filiforme est formé par une nervure solidaire de la paroi de la gaine.

5. Dispositif selon la revendication 2, caractérisé par le fait que ledit élément filiforme est enroulé selon une section droite allongée dont le petit axe coïncide avec le diamètre de la fibre optique.

6. Dispositif selon la revendication 1, caractérisé par le fait que la gaine de protection est transparente.

0082820

1/2

FIG. 1

FIG. 2

FIG. 3

FIG. 4

FIG. 5

dB

FIG. 6

dB

FIG. 7

%

FIG. 8